# FASCICULE DE BREVET EUROPEEN

(11) **EP 1 411 689 B1**
(45) Date de publication et mention de la délivrance du brevet: **02.05.2007**
(21) Numéro de dépôt: 03292232.0
(22) Date de dépôt: 11.09.2003
(51) Int. Cl.: H04L 12/56

(54) **Procédé de contrôle de retransmission de données et unité de contrôle pour mettre en oeuvre le procédé**
Sendewiederholungssteuerungsverfahren von Daten und Vorrichtung zur Durchführung des Verfahrens
Data retransmission control method and device for implementing such a method

(30) Priorité: 16.10.2002 FR 0212862
(43) Date de publication de la demande: 21.04.2004
(73) Titulaire: Nortel Networks Limited, St Laurent, Québec H4S 2A9 (CA)
(72) Inventeur: Baudry, Benjamin, 92190 Meudon (FR); Isnard, Olivier, 78220 Viroflay Cedex (FR)
(74) Mandataire: Loisel, Bertrand

(56) Documents cités:
- WO-A-01/78489
- WO-A-02/01735
- WO-A-02/065797
- GB-A- 2 361 392

## Description

La présente invention concerne les techniques de retransmission de données dans les systèmes de télécommunications. Elle concerne plus particulièrement le contrôle des retransmissions de données dans des systèmes utilisant un mode d'acquittement des données.

De nombreux systèmes de télécommunications utilisent un mode d'acquittement des données consistant, pour une entité de communication recevant des données, à acquitter leur réception, par exemple à son initiative ou bien sur requête de l'entité émettrice. Inversement, si l'entité réceptrice ne reçoit pas ou reçoit de façon incorrecte certaines données qui lui étaient destinées, elle peut transmettre à l'entité émettrice un acquittement négatif pour ces données, signalant ainsi le défaut de transmission des données correspondantes.

De façon classique, un mécanisme de retransmission des données peut s'appuyer sur le mécanisme d'acquittement. En particulier, lorsqu'un acquittement négatif est reçu par l'entité émettrice des données, celle-ci peut décider de retransmettre les données ayant fait l'objet de cet acquittement négatif.

Un tel mécanisme de retransmission est par exemple prévu dans les réseaux cellulaires de troisième génération du type UMTS ("Universal Mobile Telecommunication System") normalisés par l'organisation 3GPP ("3^{rd} Generation Partnership Project") (voir par exemple les documents GB-A-2361392 et WO-A-02/065797).

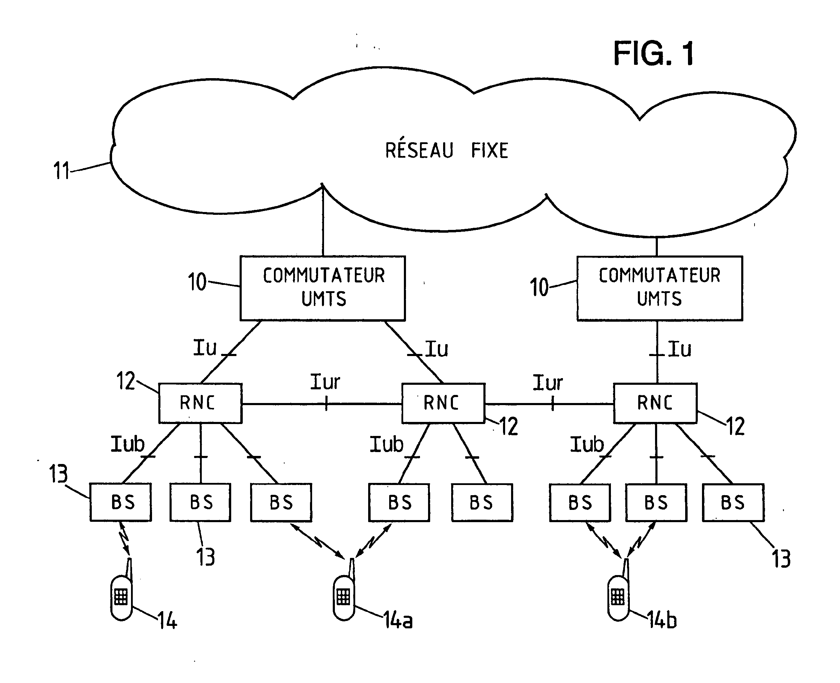

L'invention est décrite ci-après, sans que cela ne limite la généralité de son objet, dans son application à un réseau UMTS en mode de duplex fréquentiel (FDD, "Frequency Division Duplex"), dont la figure 1 montre un exemple d'architecture.

Les commutateurs du service mobile 10, appartenant à un coeur de réseau (CN, "Core Network"), sont reliés d'une part à un ou plusieurs réseaux fixes 11 et d'autre part, au moyen d'une interface dite *lu*, à des unités de contrôle 12, ou RNC ("Radio Network Controller"). Chaque RNC 12 est relié à une ou plusieurs stations de base radio 13 au moyen d'une interface dite *lub*. Les stations radio 13, réparties sur le territoire de couverture du réseau, sont capables de communiquer par radio avec les terminaux mobiles 14, 14a, 14b appelés UE ("User Equipment"). Les stations radio peuvent être regroupées pour former des noeuds appelés "node B". Certains RNC 12 peuvent en outre communiquer entre eux au moyen d'une interface dite *lur*. Les RNC et les stations radio forment un réseau d'accès appelé UTRAN (« UMTS Terrestrial Radio Access Network »).

L'UTRAN comporte des éléments des couches 1 et 2 du modèle ISO (International Standard Organization) en vue de fournir les liaisons requises sur l'interface radio (appelée Uu), et un étage 15A de contrôle des ressources radio (RRC, "Radio Resource Control") appartenant à la couche 3, ainsi qu'il est décrit dans la spécification technique 3G TS 25.301, "Radio Interface Protocol Architecture", version 4.2.0 publiée en décembre 2001 par le 3GPP. Vu des couches supérieures, l'UTRAN agit simplement comme relais entre l'UE et le CN.

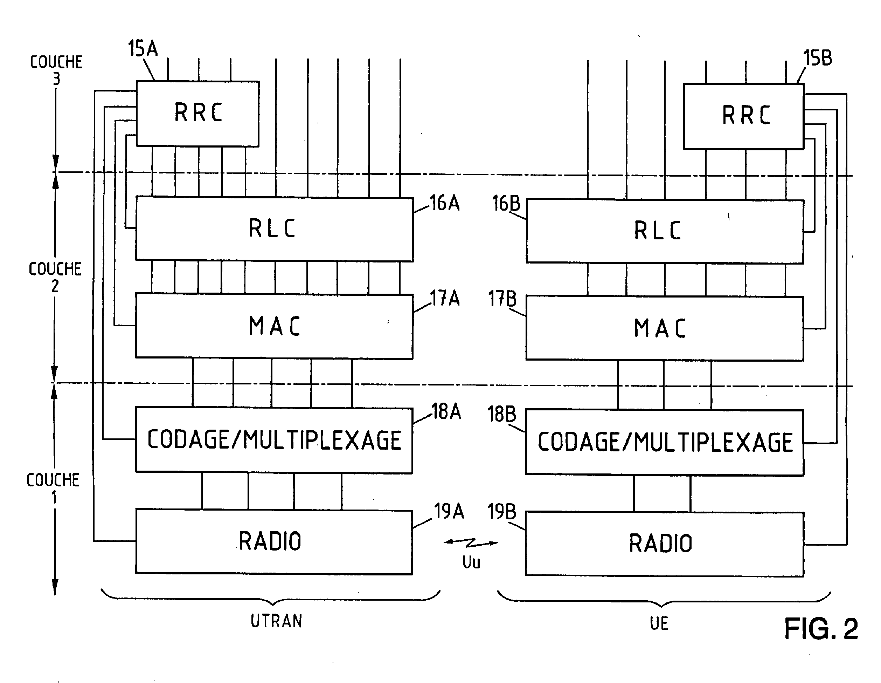

La figure 2 montre les étages RRC 15A, 15B et les étages des couches inférieures qui appartiennent à l'UTRAN et à un UE. De chaque côté, la couche 2 est subdivisée en un étage 16A, 16B de contrôle de liaison radio (RLC, "Radio Link Control") et un étage 17A, 17B de contrôle d'accès au médium (MAC, "Medium Access Control"). Une description détaillée du contrôle de liaison radio peut en particulier être trouvée dans la spécification technique TS 25.322 version 5.1.0, « Radio Link Control (RLC) protocol specification », publiée par le 3GPP en juin 2002. La couche 1 comprend un étage 18A, 18B de codage et de multiplexage. Un étage 19A, 19B radio assure l'émission des signaux radio à partir des trains de symboles fournis par l'étage 18A, 18B, et la réception des signaux dans l'autre sens.

Il existe différentes façons d'adapter l'architecture de protocoles selon la figure 2 à l'architecture matérielle de l'UTRAN selon la figure 1, et en général différentes organisations peuvent être adoptées selon les types de canaux (voir section 11.2 de la spécification technique 3G TS 25.401, "UTRAN Overall Description", version 4.2.0 publiée en septembre 2001 par le 3GPP). Les étages RRC, RLC et MAC se trouvent dans le RNC 12. La couche 1 se trouve par exemple dans le node B. Une partie de cette couche peut toutefois se trouver dans le RNC 12.

Dans un mode de fonctionnement du système, les échanges de trames RLC sont réalisés en mode acquitté. Ainsi, un bit de sondage (polling) peut être activé sur certaines trames RLC émises par un RNC 12 à destination d'un UE, pour interroger l'UE sur la réception d'une ou plusieurs trames RLC de données précédemment transmises. L'UE répond au sondage par une trame RLC de signalisation contenant un acquittement, pouvant être positif (ACK) ou négatif (NACK), et qui atteste de la réception correcte ou non des trames de données RLC précédemment transmises. Divers algorithmes sont utilisables par la couche RLC 16A du RNC pour traiter les acquittements positifs et/ou négatifs transmis par l'UE. En général, le RNC 12 retransmet les trames RLC de données ayant fait l'objet du NACK, sur réception de ce dernier.

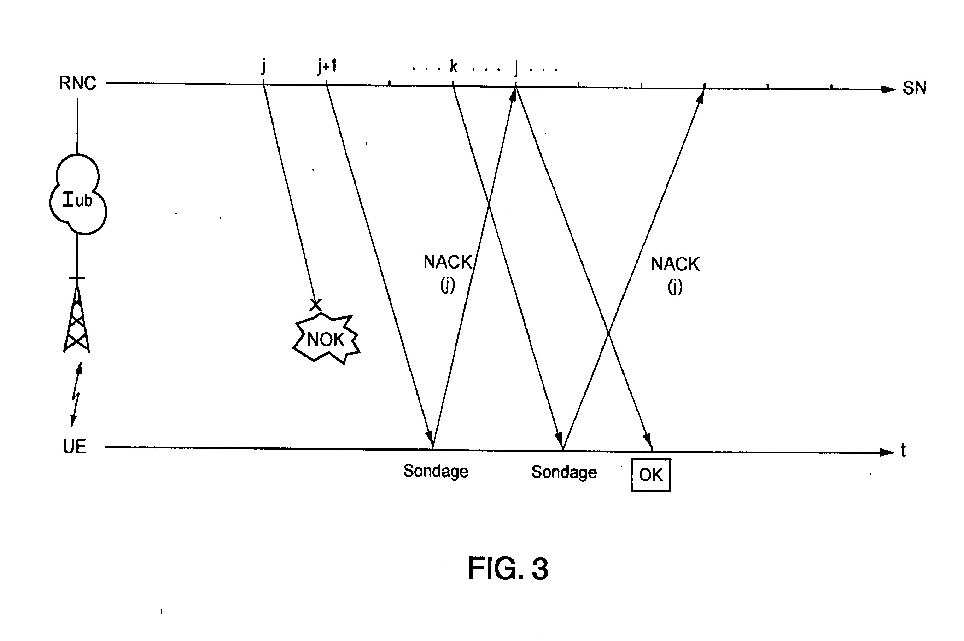

Lorsque plusieurs sondages sont émis successivement par le RNC 12, par exemple à la suite de la perte d'une trame de données j (selon un numéro de séquence SN) à destination d'un UE (référence NOK sur la figure 3), autant de NACKs successifs sont renvoyés par l'UE. Si une retransmission de la trame j a lieu à la suite de la réception au RNC d'un NACK, il est possible, cette fois, que les données correspondantes soient reçues correctement à l'UE (référence OK sur la figure). Si cette retransmission a lieu juste après un sondage par exemple, un NACK sera tout de même émis par l'UE, comme cela est illustré sur la figure 3. Pourtant, au moment où le RNC reçoit le NACK, les données ont été reçues avec succès à l'UE à la suite de la dernière retransmission.

Pour éviter qu'une nouvelle retransmission ait lieu alors que la trame j de l'exemple précédent a été reçue correctement, après un premier échec de transmission, deux solutions principales sont connues.

Selon une première méthode, l'UE déclenche une temporisation, nommée Timer_Status_Prohibit, décrite à la section 9.5 de la spécification technique 25.322 précitée, à la réception du premier sondage qu'il reçoit. Les prochains sondages reçus sont ignorés par l'UE jusqu'à l'expiration de la temporisation pour éviter d'émettre un second NACK à l'UE, alors que la retransmission des données consécutive à l'émission du premier NACK par l'UE peut faire l'objet d'une réception correcte à l'UE. Ainsi, si les données retransmises ont bien été reçues avant l'expiration de la temporisation, le prochain acquittement émis par l'UE pourra être un ACK, ce qui permettra d'éviter de nouvelles retransmissions inutiles.

Selon une seconde méthode, l'UE envoie sans distinction un NACK à chaque sondage suivant une non réception ou une réception incorrecte de données, mais un filtrage des NACKs est effectué au niveau du RNC 12. Ainsi, le second NACK transmis par l'UE dans l'exemple illustré sur la figure 3 sera ignoré par le RNC si un temps trop court s'est écoulé depuis la réception par le RNC du premier NACK. Ce temps fait classiquement l'objet d'une temporisation, comme dans le cas précédent, mais suivie au niveau du RNC. Inversement, si un nouveau NACK est reçu au RNC après l'expiration de la temporisation, celui-ci est pris en compte pour donner lieu à une nouvelle retransmission, car il peut indiquer que la première retransmission n'a pas non plus fait l'objet d'une réception correcte au niveau de l'UE.

Dans les deux méthodes présentées ci-dessus, les temporisations considérées doivent idéalement avoir la valeur du temps d'aller-retour (RTD, « Round Trip Delay ») entre le RNC et l'UE. En effet, le temps d'un RTD est nécessaire pour recevoir, à l'UE, les données retransmises après l'émission d'un NACK (première méthode), et pour recevoir un acquittement significatif au RNC suite à transmission de données (seconde méthode). Inversement, une valeur de temporisation supérieure au RTD pourrait engendrer un retard de la prise en compte des acquittements positifs au RNC, provoquant un ralentissement du débit utile, en particulier dans le cas où la quantité de données pouvant être transmises par le RNC sans attendre d'acquittement des données précédemment transmises est faible.

Or l'estimation du RTD pose une réelle difficulté dans la mesure où cette grandeur est variable. Elle peut même subir de grandes variations dans le cas où les données doivent transiter par une interface de communication asynchrone.

C'est notamment le cas, dans le système UMTS, de l'interface *lub* entre un RNC 12 et des stations radio 13, utilisant des protocoles tels que ATM ("Asynchronous Transfer Mode") et AAL2 ("ATM Adaptation Layer No. 2"). Au-dessus de ces couches protocolaires, un protocole de trames (FP, "Frame Protocol") est utilisé dans le plan d'utilisateur pour faire communiquer le RNC avec le ou les nodes B impliqués dans une communication avec un UE donné. Le protocole FP est décrit dans les spécifications techniques 3G TS 25.427, "UTRAN lub/lur Interface User Plane Protocol for DCH Data Streams", version 4.3.0, publiée en décembre 2001 par le 3GPP.

Lorsque plusieurs RNC sont impliqués dans une communication avec un UE, il y a généralement un RNC de desserte appelé SRNC ("Serving RNC"), où se trouvent les modules relevant de la couche 2 (RLC et MAC), et au moins un RNC relais appelé DRNC ("Drift RNC") auquel est relié une station radio avec laquelle l'UE est en liaison radio. Là encore, des protocoles appropriés tels que ATM et AAL2 assurent des échanges asynchrones entre ces RNC sur l'interface *lur*.

En outre, l'UMTS en mode FDD supporte une technique de macrodiversité, qui consiste à prévoir qu'un UE puisse simultanément communiquer avec des stations radio distinctes d'un ensemble actif ("active set") de façon telle que, dans le sens descendant, l'UE reçoive plusieurs fois la même information et que, dans le sens montant, le signal radio émis par l'UE soit capté par les stations radio pour former des estimations différentes ensuite combinées dans l'UTRAN. La macrodiversité procure un gain de réception qui améliore les performances du système grâce à la combinaison d'observations différentes d'une même information. Elle permet également de réaliser des transferts intercellulaires en douceur (SHO, "soft hand-off"), lorsque l'UE se déplace.

En macrodiversité, l'aiguillage des canaux de transport pour l'émission multiple depuis l'UTRAN ou l'UE et la combinaison de ces canaux de transport en réception sont des opérations qui incombent à un module de sélection et combinaison appartenant à la couche 1. Ce module est à l'interface avec la sous-couche MAC, et il se trouve dans le RNC desservant l'UE. Si les stations radio impliquées dépendent de RNC différents communiquant à travers l'interface *lur*, l'un de ces RNC peut jouer le rôle de SRNC et l'autre celui de DRNC.

Ainsi, la valeur du RTD entre un RNC et un UE peut varier considérablement du fait notamment du caractère asynchrone de l'interface *lub*. Si, en outre, on ajoute ou on retire de l'ensemble actif une station radio pour laquelle l'interface lub est lente (chargée) à l'instant considéré, le RTD subit brusquement de fortes variations compte tenu des mécanismes de synchronisation mis en oeuvre par le protocole FP.

Du fait de son caractère asynchrone et de la prise en compte des temps d'acheminement sur tous les liens de l'ensemble actif, l'interface *lub* est responsable, pour une grande part, des délais de transmission des données entre un RNC 12 et un UE 14-14a-14b, en comparaison notamment des délais de transmission sur l'interface *Uu*.

Un autre facteur pouvant faire varier le RTD est le temps de traitement des trames au node B, qui peut varier dans le temps et d'un node B à l'autre.

Même si on est capable d'estimer le RTD, la procédure permettant de changer le paramètre Timer_Status_Prohibit n'est que faiblement réactive car elle passe par une reconfiguration de la connexion RLC. En pratique, la première méthode ci-dessus ne se prête donc pas bien à une adaptation efficace aux variations du RTD.

Un but de la présente invention est de proposer un bon compromis entre le nombre de retransmissions de données et les risques de diminution du débit utile du fait d'une prise en compte trop lente d'un acquittement des données.

Un autre but de l'invention est de permettre une réduction du nombre de retransmissions superflues dans un système de communication, sans avoir à estimer le RTD de ce système. L'invention s'applique en particulier dans le cas où le système de communication a un RTD variant de façon sensible au cours du temps, par exemple du fait d'une interface de communication asynchrone.

L'invention propose ainsi un procédé de contrôle de retransmission de données depuis une unité de contrôle selon une connexion établie avec un terminal radio. L'unité de contrôle et le terminal échangent selon ladite connexion, par l'intermédiaire d'au moins une station de base, des premières trames comprenant des trames de données émises vers le terminal et des trames d'acquittement émises par le terminal et contenant des informations d'acquittement des premières trames de données. Les premières trames sont encapsulées, avec des informations d'horodatage respectives, dans des secondes trames pour être transmises entre l'unité de contrôle et chaque station de base sur une interface asynchrone. L'information d'horodatage accompagnant une des trames de données sur l'interface asynchrone désigne un instant d'émission de ladite trame de données par chaque station de base en référence à un compteur de temps propre à un tronçon radio de ladite connexion. L'information d'horodatage accompagnant une des trames d'acquittement sur l'interface asynchrone désigne un instant de réception de ladite trame d'acquittement par chaque station de base en référence audit compteur de temps. Le procédé comprend les étapes suivantes :
- mémoriser, à l'unité de contrôle, l'information d'horodatage désignant un instant d'émission d'une trame de données ; et
- à réception, à l'unité de contrôle, d'une trame d'acquittement accompagnée d'une information d'horodatage désignant un instant de réception et contenant une information d'acquittement interprétée comme signalant une non réception par le terminal de ladite trame de données, prendre en compte sélectivement ladite information d'acquittement pour contrôler la retransmission de ladite trame de données, en fonction d'une comparaison entre lesdits instants de réception et d'émission.

La comparaison entre ces deux instants fournit un critère pertinent aux algorithmes de répétition (ARQ) traitant les informations d'acquittement pour décider de retransmettre certaines trames de données. Comparé au RTD, ce critère permet avantageusement de s'affranchir des retards variables engendrés sur les interfaces asynchrones.

La prise en compte sélective de la réception de la trame d'acquittement permet par exemple de retransmettre la trame de données considérée comme non reçue par le terminal, uniquement si l'instant de réception est postérieur à l'instant d'émission d'une valeur supérieur à un seuil, qui peut être de l'ordre de la dizaine de millisecondes ou qui peut aussi être proche de zéro (les RTD typiques sur l'interface lub peuvent être d'une à quelques centaines de millisecondes). Inversement, si l'instant de réception n'est pas postérieur à l'instant d'émission d'une valeur supérieur à un tel seuil, on peut ignorer la réception -de la trame d'acquittement, pour éviter de retransmettre une trame de données déjà reçue par le terminal.

L'invention propose également une unité de contrôle adaptée à la mise en oeuvre du procédé ci-dessus et comprenant :
- des moyens pour mémoriser l'information d'horodatage désignant un instant d'émission d'une trame de données ; et
- des moyens pour, à réception d'une trame d'acquittement accompagnée d'une information d'horodatage désignant un instant de réception et contenant une information d'acquittement interprétée comme signalant une non réception par le terminal de ladite trame de données, prendre en compte sélectivement ladite information d'acquittement pour contrôler la retransmission de ladite trame de données, en fonction d'une comparaison entre lesdits instants de réception et d'émission.

D'autres particularités et avantages de la présente invention apparaîtront dans la description ci-après d'exemples de réalisation non limitatifs, en référence aux dessins annexés, dans lesquels :
- la figure 1, déjà commentée, est un schéma d'architecture d'un système de communication UMTS ;
- la figure 2, déjà commentée, est un schéma représentant les couches protocolaires communes à l'UTRAN et l'UE ;
- la figure 3, déjà commentée, est un exemple de mécanisme de sondage et de retransmission de données selon l'art antérieur ;
- la figure 4 est une représentation schématique des fenêtres entrant en jeu dans la synchronisation de l'interface lub, telle que normalisée dans le système UMTS par le 3GPP ;
- la figure 5 est un exemple de mécanisme de retransmission de données selon l'invention.

On se place à nouveau dans le cas non limitatif d'un système UMTS selon la figure 1. Comme cela a été évoqué plus haut, l'interface *lub* qui permet les échanges entre un RNC 12 et un ou plusieurs nodes B 13, est asynchrone et dispose d'un mécanisme de synchronisation des canaux de transport selon le protocole de trames FP.

Cette synchronisation des canaux de transport a pour objet de procurer une numérotation commune des trames de couche 2 entre l'UTRAN et l'UE, effectuée à l'aide d'un numéro de trame de connexion (CFN, "Connection Frame Number") de 8 bits, que la couche 2 gère pour chaque ensemble de blocs de transport (TBS, "Transport Block Set") échangé avec l'UE en l'incrémentant d'une unité toutes les 10 millisecondes.

Ce CFN n'est pas transmis sur l'interface air, mais il est adjoint aux trames échangées sur l'interface *lub*. La couche physique le transpose sur une numérotation des trames tenue à jour pour chaque cellule, définie par un numéro de trame système SFN ("System Frame Number") codé sur 12 bits. Le node B incrémente ce SFN à chaque nouvelle trame radio de 10 ms et diffuse sa valeur sur les canaux communs de contrôle de la cellule.

Pour un TBS donné et une cellule donnée, le décalage entre le CFN et le SFN est déterminé avant l'établissement du lien radio entre le node B et l'UE concerné, en termes d'un décalage exprimé par un nombre entier de trames ("Frame Offset"). Au démarrage de l'émission radio pour le TBS, ce décalage est nul : le CFN est initialisé au SFN (modulo 256) de la première trame utilisée pour l'émission du TBS. Avant l'ajout d'un lien radio en macrodiversité, l'UE mesure le décalage entre le CFN courant et le SFN diffusé par la nouvelle cellule et en rend compte au SRNC. Celui-ci en déduit le paramètre "Frame Offset" pertinent pour la nouvelle cellule et en informe le node B pour qu'il tienne compte du décalage entre les compteurs CFN et SFN.

Ainsi, un fois le décalage pris en compte, un node B dispose donc d'un référentiel commun avec tous les autres nodes B de l'ensemble actif, qui est basé sur le compteur temporel CFN de la connexion radio.

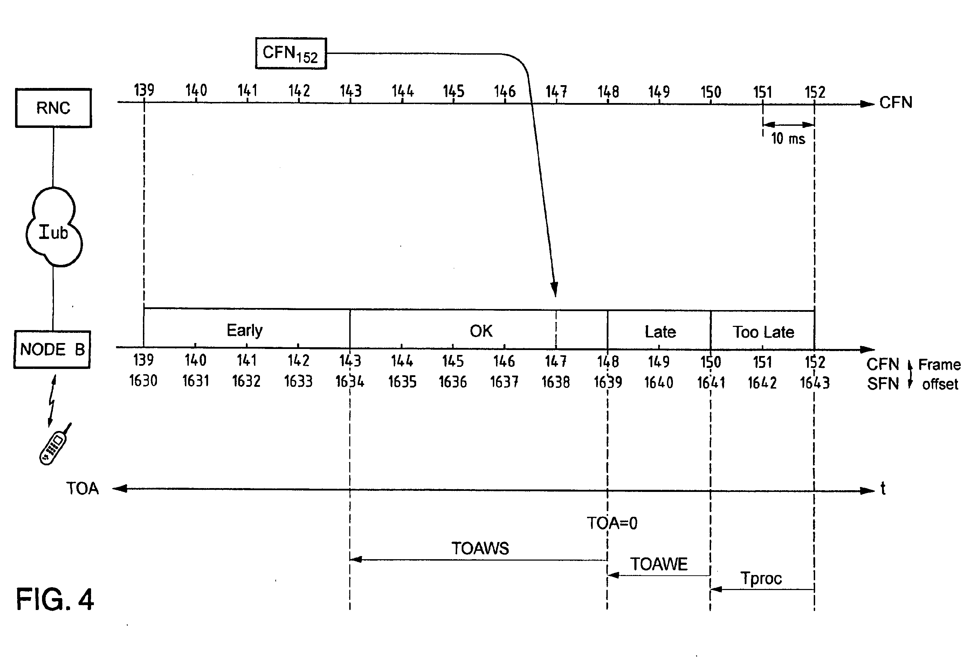

Dans le sens descendant, lorsqu'une trame de données est à transmettre à l'UE, le SRNC anticipe son émission par rapport au CFN correspondant à l'instant d'émission des données sur l'interface Uu, pour tenir compte du temps d'acheminement jusqu'au node B et du temps de traitement requis par celui-ci, notamment dans l'étage de codage et de multiplexage 18A. La norme prévoit une fenêtre de réception pour chaque trame FP (DCH-FP PDU) que le SRNC adresse à un node B, définie en référence à un axe TOA ("Time Of Arrival") dirigé en sens inverse du temps avec une origine au point de référence TOA = 0. Cette fenêtre est définie par les paramètres suivants, illustrés sur la figure 4 :
- T_{proc} égal au temps minimal, dépendant de l'équipement, nécessaire au traitement d'une trame par le node B avant qu'il puisse commencer à l'émettre sur l'interface air;
- TOAWS ("Time Of Arrival Window Startpoint") déterminant la largeur de la fenêtre de réception. Une trame reçue avec un TOA compris entre 0 et TOAWS est considérée comme normalement reçue ("OK" sur la figure 4 qui montre la fenêtre de réception pour la trame de CFN 152). Une trame reçue avec un TOA plus grand que TOAWS est considérée comme reçue en avance ("Early" sur la figure 4);
- TOAWE ("Time Of Arrival Window End") déterminant la position de la fenêtre de réception, c'est-à-dire celle du point de référence TOA = 0 qui est antérieur de T_{proc} + TOAWE à l'instant correspondant au début de la période de trame numérotée CFN (compte tenu du Frame Offset). Lorsqu'il est plus grand que 0, ce paramètre TOAWE permet de distinguer les trames reçues tardivement mais qui peuvent encore être traitées par le node B (-TOAWE < TOA < 0, "Late" sur la figure 4) et les trames reçues trop tardivement et détruites par le node B (TOA < -TOAWE, "Too Late" sur la figure 4).

Lorsque le node B reçoit une trame de données en dehors de la fenêtre correspondante, il en rend compte au RNC dans une trame TAD ("Timing Adjusment") du protocole FP, qui comporte le numéro CFN de la trame de données en question ainsi que la valeur du TOA avec lequel elle a été reçue. Ceci permet au RNC de corriger l'instant auquel il émet les trames suivantes vers le node B.

Dans les périodes où il n'y a pas de trames de données à émettre, le RNC envoie au node B des trames de signalisation "DL SYNC" contenant chacune le CFN par rapport auquel cette trame devrait être reçue. Le node B y répond immédiatement en retournant une trame "UL SYNC" indiquant ce CFN et la valeur de TOA correspondant à la réception de cette trame. Ce mécanisme permet d'éviter que la fenêtre dérive sans que le RNC en soit informé par des trames TAD.

Ces mécanismes de synchronisation sont détaillés dans la spécification technique TS 25.427 précitée.

Grâce à ces mécanismes, le RNC détermine le CFN qui est une information d'horodatage désignant l'instant d'émission de la trame sur l'interface radio par les stations radio de l'ensemble actif. Il inclut ce CFN dans la trame de données correspondantes. La figure 4 illustre ce principe : le RNC transmet une trame portant le CFN=152 avec une certaine anticipation (instant correspondant au CFN=142) pour compenser le temps d'acheminement jusqu'aux nodes B et le temps de traitement requis par ceux-ci. Conformément à la présente invention, le RNC garde alors en mémoire le CFN ainsi déterminé (CFN=152 sur la figure 4).

Dans le sens montant, chaque node B transmet des trames à son SRNC de rattachement, à travers l'interface lub et éventuellement l'interface lur. Toutefois, aucune temporisation n'existe au niveau des nodes B pour retarder ou anticiper l'émission des trames montantes, si bien que celles-ci peuvent être transmises de façon espacée dans le temps. Chaque node B inclut, dans les trames FP qu'il transmet au SRNC suite à la réception d'une trame radio émise par un terminal, un CFN qui est une information d'horodatage désignant l'instant de réception de cette trame radio au node B.

Au niveau du SRNC, une combinaison des trames reçues avec un numéro de CFN identique depuis les différents nodes B est effectuée régulièrement à l'expiration d'une temporisation ("TTI timer" ou "Transmission Time Interval timer"). Si certaines des trames montantes sont reçues par le SRNC après expiration de cette temporisation, elles seront perdues et non prises en compte dans la combinaison. A l'inverse, des trames reçues trop tôt par le SRNC, c'est-à-dire au-delà de la capacité maximum des tampons du SRNC, ne pourront pas être conservées en mémoire pour être prise en compte dans la combinaison des trames.

Par conséquent, quel que soit le temps d'acheminement des données sur l'interface *lub*, la numérotation selon l'échelle des CFN et les mécanismes de synchronisation de l'interface *lub* permettent au RNC :
- de déterminer l'instant d'émission d'une trame descendante par les nodes B, et
- de connaître l'instant de réception d'une trame montante par les nodes B.
La chronologie entre ces instants est donc connue par le RNC, sur la base des numéros de CFN correspondants.

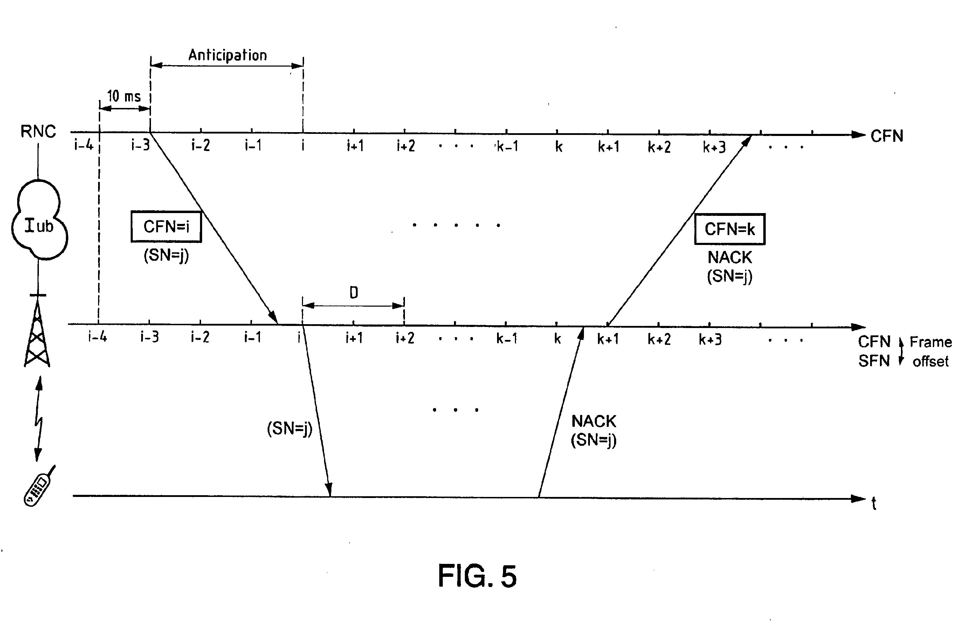

La figure 5 montre un RNC et un UE échangeant des trames RLC par l'intermédiaire d'un ensemble actif de nodes B. Les trames RLC sont encapsulées dans des trames FP sur l'interface *lub* entre le RNC et les nodes B.

Dans l'exemple illustré sur la figure 5, le RNC transmet une trame de données FP avec un CFN=i selon l'axe temporel des CFN décrit précédemment. Cela signifie que la trame FP émise par le RNC fera l'objet d'une transmission de données par les nodes B de l'ensemble actif à destination de l'UE, à un instant correspondant au CFN=i. Pour cela, une anticipation de l'émission de la trame a été effectuée par le RNC. Elle a été estimée à environ 30 millisecondes (soit trois intervalles de 10 ms dans l'échelle temporelle des CFN) dans l'exemple illustré sur la figure 5, puisque la trame est émise par le RNC à l'instant CFN=i-3. Les données incluses dans cette trame descendante sont acheminées depuis les nodes B vers l'UE concerné, dans une trame RLC de données. Selon une numérotation classique, la trame RLC a également un numéro de séquence SN=j.

Considérons désormais une trame d'acquittement RLC montante contenant une information d'acquittement de type NACK, attestant d'une réception incorrecte de la trame de données RLC de SN=j, précédemment transmise par le RNC. Ce NACK peut être émis par l'UE par exemple en réponse à un sondage du RNC, comme décrit plus haut. Ce NACK est tout d'abord acheminé de l'UE jusqu'à chaque node B de l'ensemble actif. Chaque node B de l'ensemble actif encapsule la trame d'acquittement contenant ce NACK dans une trame FP pour le transférer au RNC, en y incluant un numéro de CFN correspondant à l'instant de réception de la trame RLC montante par ce node B. Dans l'exemple illustré sur la figure 5, le node B représenté transmet le NACK en l'encapsulant dans une trame FP contenant le NACK et ayant un CFN=k, puisque le NACK a été reçu au node B dans l'intervalle de temps correspondant au CFN=k (c'est-à-dire l'intervalle de temps entre les indications CFN=k et CFN=k+1 de la figure 5).

Sur réception de cette trame FP montante, le RNC effectue une comparaison entre les CFN représentatifs d'une part de l'instant d'émission par les nodes B sur l'interface radio de la trame de données émise, de numéro de séquence SN=j, (CFN=i, préalablement mémorisé), et d'autre part de l'instant de réception par le node B de la trame montante contenant l'information NACK pour cette trame de données SN=j (CFN=k). Cela revient à comparer les entiers i et k. Une telle comparaison permet de s'affranchir des fluctuations de délais de transmission sur l'interface *lub*. Elle permet également de s'affranchir des délais de traitement par les nodes B, par exemple pour transférer les données d'une trame reçue.

Si la différence de temps mesurée par k-i est supérieure à un seuil prédéfini, noté D sur la figure 5, cela signifie que le NACK a été reçu par le node B avec un retard supérieur à D, par rapport à la dernière émission, par le node B, de la trame de données en question. Le seuil D est commodément un multiple de 10 millisecondes , ce qui permet de l'exprimer comme un entier. Il peut être de l'ordre du RTD sur l'interface *Uu* entre les nodes B et l'UE, incluant les temps de traitement des données par l'UE. Si l'on dispose d'un moyen d'estimation de ce RTD sur l'interface *Uu*, il peut être avantageux de prévoir un mécanisme pour faire varier le seuil D. Toutefois, ce RTD étant le plus souvent faible en comparaison du temps de propagation sur l'interface *lub*, le seuil D peut aussi avoir une valeur fixe relativement faible (par exemple D=1 ou 2 en unités de 10 ms), voire nulle selon un mode de réalisation de l'invention, ce qui revient à comparer simplement les valeurs des entiers k et i entre elles. On se place ci-après, de façon non limitative, dans ce dernier cas où D=0.

Ainsi, si k est un entier supérieur à i, cela indique que la trame radio montante portant le NACK a été reçue par le node B considéré après l'émission par ce node B des données correspondant à la trame de données qui n'a pas été correctement acquittée. Ce mécanisme garantit ainsi que le NACK transmis au RNC est consécutif à la transmission par le node B de la trame de données initiale et correspond donc à un acquittement négatif justifié. Une retransmission des données peut alors être effectuée par le RNC sur réception du NACK.

Inversement, si k est inférieur à i, cela signifie que le NACK a sans doute été émis avant la transmission par le node B de la trame de données issue du RNC. Ce NACK ne prend donc pas en compte l'éventuelle réception correcte des données de la trame radio de CFN=i par l'UE. Dans ce cas, le RNC ignore le NACK et ne commande donc pas immédiatement de retransmission des données.

Dans l'exemple illustré sur la figure 5, une seule trame RLC est transmise par période de 10 millisecondes. Toutefois, l'émission de plusieurs trames RLC peut tout à fait être envisagée durant cette période.

En outre, l'échelle des CFN, telle qu'elle est définie dans le système UMTS, est limitée à 4096, ce qui signifie que le CFN=1 succède au CFN=4096 sur l'axe temporel représenté sur la figure 5. Dans ces conditions, il faut considérer que la comparaison entre les entiers k et i s'exprime modulo 4096.

On peut en outre noter que l'invention ne se limite pas à un algorithme d'acquittement et de retransmission particulier. Au contraire, le RNC peut effectuer une retransmission sélective d'un ensemble de trames qu'il considère comme non reçues correctement sur la base d'un acquittement quelconque.

L'invention a été décrite ci-dessus, dans son application à un réseau UMTS. Toutefois, tout autre système de communication peut être envisagé pour mettre en oeuvre l'invention.

## Revendications

1. Procédé de contrôle de retransmission de données depuis une unité de contrôle (12) selon une connexion établie avec un terminal radio (14-14a-14b),
dans lequel l'unité de contrôle et le terminal échangent selon ladite connexion, par l'intermédiaire d'au moins une station de base, des premières trames comprenant des trames de données émises vers le terminal et des trames d'acquittement émises par le terminal et contenant des informations d'acquittement des premières trames de données,
dans lequel les premières trames sont encapsulées, avec des informations d'horodatage respectives, dans des secondes trames pour être transmises entre l'unité de contrôle et chaque station de base sur une interface asynchrone,
dans lequel l'information d'horodatage accompagnant une des trames de données sur l'interface asynchrone désigne un instant d'émission de ladite trame de données par chaque station de base en référence à un compteur de temps propre à un tronçon radio de ladite connexion,
dans lequel l'information d'horodatage accompagnant une des trames d'acquittement sur l'interface asynchrone désigne un instant de réception de ladite trame d'acquittement par chaque station de base en référence audit compteur de temps,
**caractérisé en ce qu**'il comprend les étapes suivantes :
- mémoriser, à l'unité de contrôle, l'information d'horodatage désignant un instant d'émission d'une trame de données ; et
- à réception, à l'unité de contrôle, d'une trame d'acquittement accompagnée d'une information d'horodatage désignant un instant de réception et contenant une information d'acquittement interprétée comme signalant une non réception par le terminal de ladite trame de données, prendre en compte sélectivement ladite information d'acquittement pour contrôler une retransmission de ladite trame de données, en fonction d'une comparaison entre lesdits instants de réception et d'émission.

2. Procédé selon la revendication 1, dans lequel la prise en compte sélective de ladite information d'acquittement comprend l'alternative :
- ignorer ladite information d'acquittement lorsque ledit instant de réception n'est pas postérieur audit instant d'émission d'une valeur supérieure à un seuil ; ou
- prendre en compte ladite information d'acquittement lorsque ledit instant de réception est postérieur audit instant d'émission d'une valeur supérieure audit seuil.

3. Procédé selon la revendication 2, dans lequel ledit seuil est sensiblement nul.

4. Procédé selon la revendication 2, dans lequel ledit seuil est de l'ordre de la dizaine de millisecondes.

5. Procédé selon la revendication 2, dans lequel ledit seuil est variable.

6. Unité de contrôle (12) comprenant des moyens pour échanger des premières trames avec un terminal radio (14-14a-14b) selon une connexion établie avec ledit terminal radio, par l'intermédiaire d'au moins une station de base,
dans laquelle les premières trames comprennent des trames de données émises vers le terminal et des trames d'acquittement émises par le terminal et contenant des informations d'acquittement des premières trames de données,
dans laquelle les premières trames sont encapsulées, avec des informations d'horodatage respectives, dans des secondes trames pour être transmises entre l'unité de contrôle et chaque station de base sur une interface asynchrone,
dans laquelle l'information d'horodatage accompagnant une des trames de données sur l'interface asynchrone désigne un instant d'émission de ladite trame de données par chaque station de base en référence à un compteur de temps propre à un tronçon radio de ladite connexion,
dans laquelle l'information d'horodatage accompagnant une des trames d'acquittement sur l'interface asynchrone désigne un instant de réception de ladite trame d'acquittement par chaque station de base en référence audit compteur de temps,
**caractérisée en ce qu'**elle comprend en outre :
- des moyens pour mémoriser l'information d'horodatage désignant un instant d'émission d'une trame de données ; et
- des moyens pour, à réception d'une trame d'acquittement accompagnée d'une information d'horodatage désignant un instant de réception et contenant une information d'acquittement interprétée comme signalant une non réception par le terminal de ladite trame de données, prendre en compte sélectivement ladite information d'acquittement pour contrôler la retransmission de ladite trame de données, en fonction d'une comparaison entre lesdits instants de réception et d'émission.

7. Unité de contrôle selon la revendication 6, dans laquelle les moyens de prise en compte sélective de ladite information d'acquittement sont agencés :
- pour ignorer ladite information d'acquittement lorsque ledit instant de réception n'est pas postérieur audit instant d'émission d'une valeur supérieure à un seuil ; et
- pour prendre en compte ladite information d'acquittement lorsque ledit instant de réception est postérieur audit instant d'émission d'une valeur supérieure audit seuil.

8. Unité de contrôle selon la revendication 7, dans laquelle ledit seuil est sensiblement nul.

9. Unité de contrôle selon la revendication 7, dans laquelle ledit seuil est de l'ordre de la dizaine de millisecondes.

10. Unité de contrôle selon la revendication 7, dans laquelle ledit seuil est variable.

## Claims

1. Method for controlling data retransmission from a control unit (12) over a connection established with a radio terminal (14-14a-14b),
in which the control unit and the terminal exchange over the said connection, by means of at least one base station, first frames comprising data frames sent to the terminal and acknowledgement frames sent by the terminal and containing acknowledgement information in respect of the first data frames,
in which the first frames are encapsulated, with corresponding timestamping information, in second frames for transmission between the control unit and each base station over an asynchronous interface,
in which the timestamping information accompanying one of the data frames over the asynchronous interface indicates an instant of transmission of the said data frame by each base station with reference to a time counter specific to a radio section of the said connection,
in which the timestamping information accompanying one of the acknowledgement frames over the asynchronous interface indicates an instant of reception of the said acknowledgement frame by each base station with reference to the said time counter,
**characterized in that** it comprises the following steps:
- the storage at the control unit of the timestamping information indicating an instant of transmission of a data frame; and
- upon reception at the control unit of an acknowledgement frame accompanied by timestamping information indicating an instant of transmission and containing acknowledgement information interpreted as indicating non-reception of the said data frame by the terminal, the selective taking into account of the said acknowledgement information for controlling a retransmission of the said data frame, on the basis of a comparison between the said instants of reception and transmission.

2. Method according to Claim 1, in which the selective taking into account of the said acknowledgement information comprises the alternatives of
- ignoring the said acknowledgement information if the said instant of reception is not later than the said instant of transmission by an amount exceeding a threshold; or
- taking into account the said acknowledgement information if the said instant of reception is later than the said instant of transmission by an amount exceeding the said threshold.

3. Method according to Claim 2, in which the said threshold is practically zero.

4. Method according to Claim 2, in which the said threshold is of the order of ten milliseconds.

5. Method according to Claim 2, in which the said threshold is variable.

6. Control unit (12) comprising means for exchanging first frames with a radio terminal (14-14a-14b) over a connection established with the said radio terminal, by means of at least one base station,
in which the first frames comprise data frames sent to the terminal and acknowledgement frames sent by the terminal and containing acknowledgement information in respect of the first data frames,
in which the first frames are encapsulated, with corresponding timestamping information, in second frames for transmission between the control unit and each base station over an asynchronous interface,
in which the timestamping information accompanying one of the data frames over the asynchronous interface indicates an instant of transmission of the said data frame by each base station with reference to a time counter specific to a radio section of the said connection,
in which the timestamping information accompanying one of the acknowledgement frames over the asynchronous interface indicates an instant of reception of the said acknowledgement frame by each base station with reference to the said time counter,
**characterized in that** it additionally comprises:
- means for storing the timestamping information indicating an instant of transmission of a data frame; and
- means by which, upon reception at the control unit of an acknowledgement frame accompanied by timestamping information indicating an instant of transmission and containing acknowledgement information interpreted as indicating non-reception of the said data frame by the terminal, the said acknowledgement information for controlling retransmission of the said data frame is selectively taken into account, on the basis of a comparison between the said instants of reception and transmission.

7. Control unit according to Claim 6, in which the means of selectively taking into account the said acknowledgement information are arranged
- to ignore the said acknowledgement information if the said instant of reception is not later than the said instant of transmission by an amount exceeding a threshold; and
- to take into account the said acknowledgement information if the said instant of reception is later than the said instant of transmission by an amount exceeding the said threshold.

8. Control unit according to Claim 7, in which the said threshold is practically zero.

9. Control unit according to Claim 7, in which the said threshold is of the order of ten milliseconds.

10. Control unit according to Claim 7, in which the said threshold is variable.

## Patentansprüche

1. Verfahren zum Steuern von Datensendewiederholung ausgehend von einer Steuereinheit (12) auf einer Verbindung, die mit einem Funkterminal (14-14a-14b) aufgebaut ist,
bei dem die Steuereinheit und das Terminal auf der Verbindung über mindestens eine Basisstation erste Rahmen austauschen, die Datenrahmen enthalten, die zu dem Terminal gesendet werden, und Empfangsbestätigungsrahmen, die von dem Terminal gesendet werden und Empfangsbestätigungsinformationen der ersten Datenrahmen enthalten,
bei dem die ersten Rahmen mit jeweiligen Zeitstempelinformationen in zweiten Rahmen gekapselt sind, um zwischen der Steuereinheit und jeder Basisstation auf einer asynchronen Schnittstelle übertragen zu werden,
wobei die Zeitstempelinformation, die einen der Datenrahmen auf der asynchronen Schnittstelle begleitet, einen Sendeaugenblick des Datenrahmens für jede Basisstation in Bezug auf einen Zeitzähler, der einer Funkstrecke der Verbindung eigen ist, bezeichnet,
wobei die Zeitstempelinformation, die einen der Empfangsbestätigungsrahmen auf der asynchronen Schnittstelle begleitet, einen Empfangsaugenblick des Empfangsbestätigungsrahmens durch jede Basisstation in Bezug auf den Zeitzähler bezeichnet,
**dadurch gekennzeichnet, dass** es die folgenden Schritte aufweist:
- Speichern an der Steuereinheit der Zeitstempelinformation, die einen Sendeaugenblick eines Datenrahmens bezeichnet, und
- beim Empfang an der Steuereinheit eines Empfangsbestätigungsrahmens begleitet von einer Zeitstempelinformation, die einen Empfangsaugenblick bezeichnet und eine Empfangsbestätigungsinformation enthält, die als das Nichtempfangen durch das Terminal des Datenrahmens meldend ausgelegt wird, selektives Berücksichtigen der Empfangsbestätigungsinformation, um eine Sendewiederholung des Datenrahmens in Abhängigkeit von einem Vergleich zwischen den Empfangs- und Sendeaugenblicken zu steuern.

2. Verfahren nach Anspruch 1, bei dem die selektive Berücksichtigung der Empfangsbestätigungsinformation die folgende Alternative aufweist:
- Ignorieren der Empfangsbestätigungsinformation, wenn der Empfangsaugenblick nicht um einen Wert, der größer ist als ein Schwellenwert, nach dem Sendeaugenblick liegt, oder
- Berücksichtigen der Empfangsbestätigungsinformation, wenn der Empfangsaugenblick um einen Wert größer als der Schwellenwert nach dem Sendeaugenblick liegt.

3. Verfahren nach Anspruch 2, bei dem der Schwellenwert im Wesentlichen gleich Null ist.

4. Verfahren nach Anspruch 2, bei dem der Schwellenwert in der Größenordnung des Zehners von Millisekunden ist.

5. Verfahren nach Anspruch 2, bei dem der Schwellenwert variabel ist.

6. Steuereinheit (12), die Mittel zum Austauschen der ersten Rahmen mit einem Funkterminal (14-14a-14b) gemäß einer Verbindung aufweist, die mit dem Funkterminal aufgebaut ist, über mindestens eine Basisstation,
wobei die ersten Rahmen Datenrahmen enthalten, die zu dem Terminal gesendet werden, und Empfangsbestätigungsrahmen, die von dem Terminal gesendet werden und Empfangsbestätigungsinformationen der ersten Datenrahmen enthalten,
bei der die ersten Rahmen mit jeweiligen Zeitstempelinformationen in zweiten Rahmen gekapselt sind, um zwischen der Steuereinheit und jeder Basisstation auf einer asynchronen Schnittfläche übertragen zu werden,
bei der die Zeitstempelinformation, die einen der Datenrahmen auf der asynchronen Schnittstelle begleitet, einen Sendeaugenblick des Datenrahmens von jeder Basisstation in Bezug auf einen Zeitzähler bezeichnet, der einer Funkstrecke der Verbindung eigen ist,
bei der die Zeitstempelinformation, die einen der Empfangsbestätigungsrahmen auf der asynchronen Schnittstelle begleitet, einen Empfangsaugenblick des Empfangsbestätigungsrahmens durch jede Basisstation in Bezug auf den Zeitzähler bezeichnet,
**dadurch gekennzeichnet, dass** sie ferner Folgendes aufweist:
- Mittel zum Speichern der Zeitstempelinformation, die einen Sendeaugenblick eines Datenrahmens bezeichnet, und
- Mittel, um beim Empfang eines Empfangsbestätigungsrahmens begleitet von einer Zeitstempelinformation, die einen Empfangsaugenblick bezeichnet und eine Empfangsbestätigungsinformation enthält, die als ein Nichtempfangen durch das Terminal des Datenrahmens meldend ausgelegt wird, selektiv die Empfangsbestätigungsinformation zu berücksichtigen, um die Sendewiederholung des Datenrahmens in Abhängigkeit von einem Vergleich zwischen dem Empfangs- und dem Sendeaugenblick zu steuern.

7. Steuereinheit nach Anspruch 6, bei der die Mittel zum selektiven Berücksichtigen der Empfangsbestätigungsinformation eingerichtet sind:
- um die Empfangsbestätigungsinformation zu ignorieren, wenn der Empfangsaugenblick nicht um einen Wert größer als ein Schwellenwert nach dem Sendeaugenblick liegt, und
- um die Empfangsbestätigungsinformation zu berücksichtigen, wenn der Empfangsaugenblick um einen Wert größer als der Schwellenwert nach dem Sendeaugenblick liegt.

8. Steuereinheit nach Anspruch 7, bei der der Schwellenwert im Wesentlichen gleich Null ist.

9. Steuereinheit nach Anspruch 7, bei der der Schwellenwert in der Größenordnung des Zehners von Millisekunden liegt.

10. Steuereinheit nach Anspruch 7, bei der der Schwellenwert variabel ist.
